# FASCICULE DE BREVET EUROPEEN

(11) **EP 2 016 365 B1**
(45) Date de publication et mention de la délivrance du brevet: **28.09.2011**
(21) Numéro de dépôt: 07731353.4
(22) Date de dépôt: 24.04.2007
(51) Int. Cl.: G01B 5/20, G01B 7/28

(54) **PROCÉDÉ D'ACQUISITION DE LA FORME D'UNE PARTIE AU MOINS D'UNE SECTION D'UN CERCLE DE MONTURE DE LUNETTES**
VERFAHREN ZUM BESCHAFFEN MINDESTENS EINES TEILS DER FORM EINES TEILS EINES BRILLENRAHMENKREISES
METHOD OF ACQUIRING OF AT LEAST A PORTION OF THE SHAPE OF A SECTION OF A SPECTACLE FRAME CIRCLE

(30) Priorité: 05.05.2006 FR 0604025
(43) Date de publication de la demande: 21.01.2009
(73) Titulaire: ESSILOR INTERNATIONAL (Compagnie Générale d'Optique), 94220 Charenton le Pont (FR)
(72) Inventeur: HADDADI, Ahmed, 94227 Charenton Le Pont (FR)
(74) Mandataire: Chauvin, Vincent
(86) Numéro de dépôt international: PCT/FR2007/000694
(87) Numéro de publication internationale: WO 2007/128902

(56) Documents cités:
- EP-A1- 0 819 967
- EP-A2- 0 851 265
- EP-A2- 1 092 502
- DE-A1- 19 804 542

## Description

La présente invention concerne de manière générale le domaine de la lunetterie et plus précisément l'acquisition de la forme d'un cercle d'une monture de lunettes du type cerclée.

Elle concerne plus particulièrement un procédé d'acquisition de la forme d'une partie au moins d'une section d'un cercle d'une monture de lunettes choisie par un futur porteur, comprenant l'acquisition d'au moins une caractéristique géométrique de ladite section.

### ARRIÈRE-PLAN TECHNOLOGIQUE

La partie technique du métier de l'opticien consiste à monter une paire de lentilles ophtalmiques sur une monture sélectionnée par un porteur. Ce montage se décompose en trois opérations principales :
- l'acquisition de la forme du drageoir de chacun des deux cercles de la monture de lunettes choisie par le futur porteur, c'est-à-dire de la forme du brin longitudinal du drageoir correspondant généralement au fond des rainures qui parcourent l'intérieur de chaque cercle de la monture, et éventuellement de la section du drageoir,
- le centrage de chaque lentille qui consiste à déterminer la position qu'occupera chaque lentille sur la monture afin d'être convenablement centrée en regard de la pupille de l'oeil du porteur de manière à ce qu'elle exerce convenablement la fonction optique pour laquelle elle a été conçue,
- le détourage de chaque lentille qui consiste à usiner ou à découper son contour à la forme souhaitée, compte tenu des paramètres de centrage définis, avec, en fin d'usinage, le biseautage qui consiste à réaliser sur la tranche de la lentille un biseau destiné à maintenir la lentille dans le drageoir que comporte la monture.

Dans le cadre de la présente invention, on s'intéresse notamment à la première opération d'acquisition de la forme des drageoirs des cercles de la monture de lunettes choisie.

En pratique, il s'agit tout d'abord, pour l'opticien, de palper le contour intérieur de chacun des deux cercles de la monture de lunettes sélectionnée afin de déterminer précisément les coordonnées d'une pluralité de points caractérisant la forme du brin longitudinal du drageoir de chaque cercle. La connaissance de la forme de ce brin permet à l'opticien de déduire la forme que devra présenter le contour de la lentille correspondante, une fois détourée et biseautée, afin de pouvoir être insérée dans le cercle concerné de la monture.

L'objectif de cette opération est en particulier de suivre très exactement le fond du drageoir du cercle à lire, de manière à pouvoir mémoriser une image numérique précise de la forme du brin longitudinal du drageoir.

Pour améliorer la précision de l'emboitement de la lentille dans le cercle correspondant de la monture, l'opticien peut, comme l'exposent la demande de brevet FR 05 12457 et le brevet EP 0 819 967 de la demanderesse, procéder à une autre opération d'acquisition par palpage de la forme d'une section du drageoir, de manière à pouvoir prévoir la manière selon laquelle le biseau de la lentille ophtalmique va s'emboîter dans le drageoir. L'acquisition de la forme d'une section du drageoir permet en particulier de calculer la profondeur d'enfoncement du biseau de la lentille ophtalmique dans le drageoir de la monture de lunettes afin d'usiner le contour des lentilles avec une précision accrue tenant compte de cette profondeur d'enfoncement.

Généralement, toutes les sections d'un même drageoir présentent des géométries identiques ; cependant, l'opticien peut acquérir les formes de plusieurs sections du drageoir afin de prendre en compte l'inclinaison du drageoir due à la cambrure de la monture.

L'inconvénient principal d'une telle opération de lecture de sections de drageoir est qu'elle est fastidieuse et longue à mettre en oeuvre pour l'opticien, en particulier s'il doit lire plusieurs sections d'un même drageoir.

Un autre objectif de cette opération d'acquisition des formes des drageoirs des cercles de la monture de lunettes choisie est de déterminer la position axiale optimale des lentilles par rapport aux bords avant ou arrière des cercles, de manière que le montage des lentilles sur la monture soit esthétique. En effet, par soucis d'esthétisme, on prévoit généralement de positionner les faces avant des lentilles à la hauteur des bords avant des cercles. En pratique, ce positionnement est réalisé en acquérant la position du fond du drageoir par rapport aux bords avant et/ou arrière des cercles de la monture, en au moins un point des cercles.

Toutefois, ici également, cette opération est fastidieuse et longue à mettre en oeuvre.

### OBJET DE L'INVENTION

Afin notamment de remédier à l'inconvénient précité de l'état de la technique, on propose selon l'invention un procédé d'acquisition de la forme d'une section d'un cercle d'une monture de lunettes choisie selon la revendication 1.

Ainsi, grâce à l'invention, lorsque la monture de lunettes choisie correspond à un modèle ou à une catégorie de modèles de montures de lunettes référencé dans le registre, l'étape de palpage de la section du drageoir est éludée au profit d'une étape très rapide de lecture dans le registre d'au moins une caractéristique géométrique de la section du drageoir. Cette simple étape de lecture permet ensuite de prévoir la manière selon laquelle le biseau de la lentille ophtalmique est destiné à s'emboîter dans le drageoir de la monture de lunettes choisie. Elle permet alors d'usiner en conséquence la tranche de la lentille. Cette étape de lecture peut en particulier permettre de récupérer la distance séparant le fond de drageoir et le bord avant de la monture en au moins un point des cercles. De cette manière, le biseau peut être positionné sur la tranche de la lentille de telle sorte que le bord avant et/ou arrière de la lentille soit situé, une fois la lentille montée dans son cercle, à une distance prédéterminée du bord avant de ce cercle.

Le registre peut, dans un premier mode de réalisation, comporter des enregistrements associés chacun à un modèle défini de monture. En variante, le registre peut comporter des enregistrements associés chacun à une catégorie référencée de modèles de montures de lunettes. Il n'est alors pas forcément nécessaire que le modèle de la monture de lunettes choisie soit déjà connu ; il suffit que la catégorie à laquelle appartient le modèle de la monture choisie soit déterminée afin d'acquérir, si cette catégorie est référencée, la caractéristique géométrique de la section du drageoir. Plusieurs modèles de montures de lunettes réalisés par un même fabricant peuvent en effet présenter des géométries de sections de drageoirs identiques, si bien qu'il n'est pas utile de déterminer la forme de la section des drageoirs de chaque modèle de monture de la catégorie.

Selon une première caractéristique avantageuse de l'invention, l'étape de lecture du registre est précédée d'une étape de détermination d'un identifiant d'un modèle ou d'une catégorie de modèles de montures de lunettes auquel appartient la monture de lunettes choisie, et, chaque enregistrement dudit registre comprenant au moins un identifiant du modèle ou de la catégorie de modèles auquel il est associé, la recherche d'un enregistrement correspondant est effectuée en recherchant un enregistrement dont l'identifiant correspond à l'identifiant déterminé du modèle ou de la catégorie de modèles de montures de lunettes à laquelle appartient la monture de lunettes choisie.

Ainsi, la recherche de la catégorie de la monture choisie est facilitée.

Préférentiellement, si aucun enregistrement correspondant n'est trouvé dans le registre, on procède à une étape de palpage, avec ou sans contact, d'au moins une section du cercle de la monture de lunettes choisie et on en déduit la caractéristique géométrique de section recherchée.

Le registre utilisé peut, soit être intégré à l'appareil de lecture effectuant le palpage des cercles de la monture choisie, soit être constitué par un registre central appartenant à un serveur informatique consultable par une pluralité d'opticiens. Une combinaison de ces deux solutions peut aussi être envisagée.

S'il est intégré, il est rempli par l'opticien à chaque fois que ce dernier procède au palpage d'une section de drageoir d'une catégorie de modèles de montures que le registre n'a pas en mémoire, ce qui évite à l'opticien de palper plusieurs fois des sections de drageoirs de montures de lunettes d'une même catégorie de modèles.

Selon une caractéristique avantageuse de l'invention, l'étape de détermination de l'identifiant du modèle ou de la catégorie de modèles de montures de lunettes à laquelle appartient la monture choisie est réalisée par lecture, par un opérateur, d'un code d'identification de la monture de lunettes choisie.

Ainsi, l'opticien peut-il lire l'identifiant du modèle ou de la catégorie de modèles de la monture choisie puis, soit rechercher dans un registre au format papier les caractéristiques de la forme de la section du drageoir qu'il recherche, soit recopier l'identifiant, par exemple par l'intermédiaire d'un clavier relié à un dispositif informatique, pour que ce dernier puisse lancer la recherche d'un enregistrement correspondant.

Selon une variante, l'étape de détermination de l'identifiant du modèle ou de la catégorie de modèles de montures de lunettes à laquelle appartient la monture choisie est réalisée par lecture de moyens d'identification équipant la monture de lunettes choisie. Avantageusement alors, les moyens d'identification de la monture de lunettes choisie comprennent un transpondeur ou un code-barres.

Ainsi l'appareil réalisant la lecture de la forme du brin longitudinal peut-il lire automatiquement un code-barres d'une étiquette solidarisée à la monture afin de procéder rapidement et automatiquement à la recherche de l'enregistrement correspondant, ce qui évite à l'opticien toute charge supplémentaire pour la mise en oeuvre du procédé d'acquisition selon l'invention. L'appareil de lecture de forme peut également recevoir des ondes provenant du transpondeur solidaire de la monture, les traiter puis les lire afin de déterminer automatiquement l'identifiant du modèle ou de la catégorie de modèles auquel appartient la monture de lunettes choisie.

Selon une autre variante du procédé d'acquisition, on acquiert la forme d'un brin longitudinal d'un drageoir du cercle de la monture de lunettes choisie et on en déduit ledit identifiant du modèle ou de la catégorie de modèles de la monture choisie.

Ainsi, l'identifiant de chaque monture peut-il être élaboré rapidement à partir des données acquises usuellement par l'opticien lors de la lecture de la forme du contour d'un drageoir, sans nécessiter aucune opération supplémentaire. Cet identifiant peut être constitué, par exemple, des coordonnées géométriques de certains points caractéristiques de la forme du brin longitudinal du drageoir.

Avantageusement alors, l'identifiant déterminé est un ensemble de données caractérisant ou représentant la forme du brin longitudinal du drageoir de la monture choisie et l'identifiant de chaque enregistrement du registre est un ensemble de données caractérisant ou représentant la forme du brin longitudinal du drageoir du modèle ou de la catégorie de modèles associé à l'enregistrement.

Avantageusement, chaque enregistrement du registre est associé à un unique modèle de montures de lunettes.

Ainsi, les formes des sections des drageoirs des modèles de montures référencés, et en particulier leur inclinaison, peuvent être enregistrées dans le registre avec une précision accrue.

Avantageusement, ladite au moins une caractéristique géométrique de section du cercle comprend une caractéristique géométrique qui est relative à la forme d'un drageoir du cercle et/ou à une distance séparant le fond du drageoir de ce cercle et un bord avant ou arrière de ce cercle.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un appareil de lecture de forme selon l'invention accueillant une monture de lunettes ;
- la figure 2 est une vue schématique de côté de la monture de lunettes de la figure 1 ;
- la figure 3 est une vue schématique en coupe des cercles de la monture de lunettes de la figure 1 ;
- les figures 4 et 5 sont des vues en coupe d'un palpeur de l'appareil de lecture de forme de la figure 1 en contact du drageoir d'un des cercles de la monture de lunettes de la figure 1, ces figures 4 et 5 permettent de voir deux sections distinctes du drageoir ; et
- la figure 6 est une vue en coupe partielle d'une lentille ophtalmique emboîtée dans le drageoir d'un des cercles de la monture de lunettes de la figure 1.

Pour la mise en oeuvre du procédé selon l'invention, il faut disposer d'un appareil de lecture de forme. Cet appareil de lecture de forme est un moyen bien connu de l'homme du métier et ne fait pas en propre l'objet de l'invention décrite. Il est par exemple possible d'utiliser un appareil de lecture de forme tel que décrit dans le brevet EP 0 750 172 ou commercialisé par Essilor International sous la marque Kappa ou sous la marque Kappa CT.

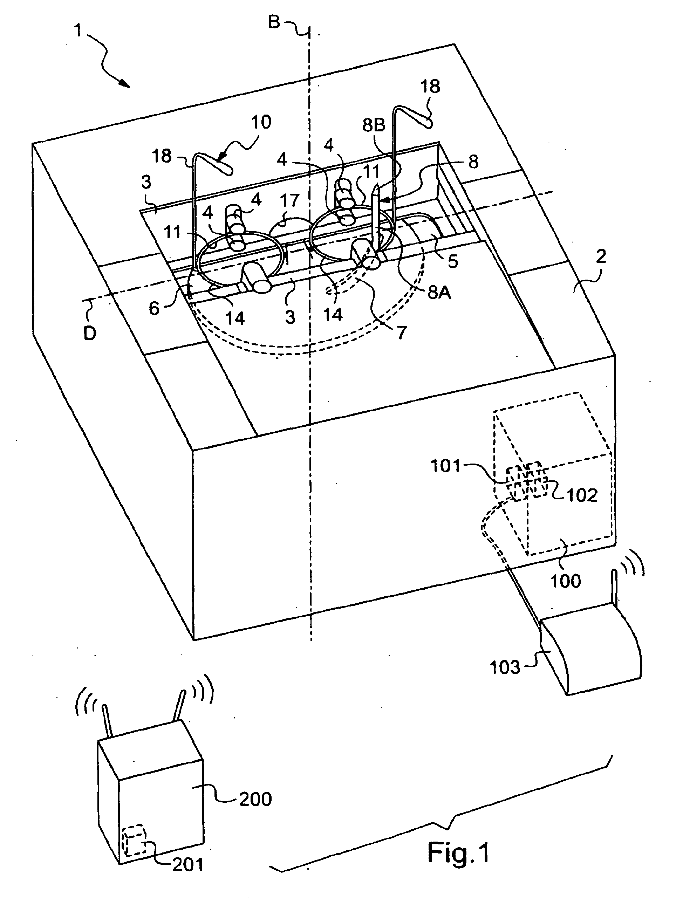

La figure 1 est une vue générale de cet appareil de lecture de forme 1, tel qu'il se présente à son utilisateur. Cet appareil comporte un capot supérieur 2 recouvrant l'ensemble de l'appareil à l'exception d'une portion supérieure centrale.

L'appareil de lecture de forme 1 est destiné à relever la forme des drageoirs 11 d'une monture de lunettes choisie par un porteur.

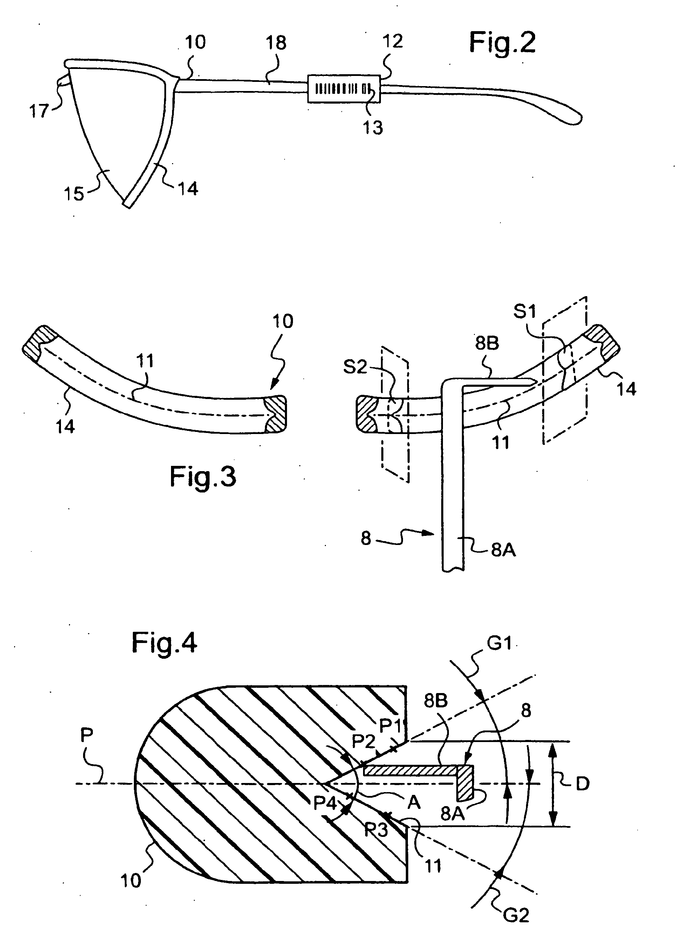

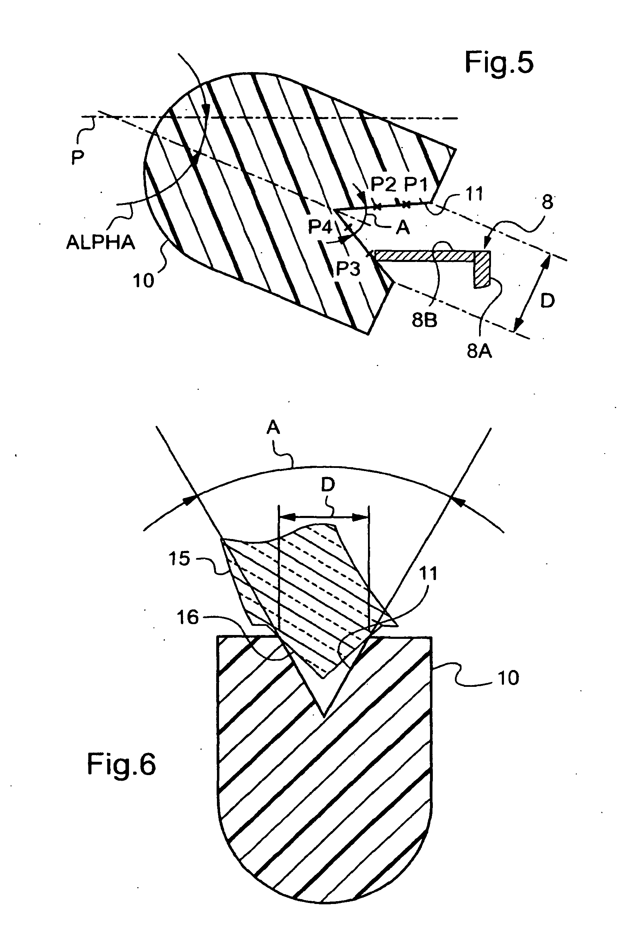

La monture de lunettes choisie 10 est ici de type cerclé. Elle comporte, comme le montrent plus précisément les figures 1 et 2, deux cercles 14, à savoir un cercle droit et un cercle gauche destinés à être respectivement positionnés en regard de l'oeil droit et de l'oeil gauche du porteur lorsque ce dernier porte ladite monture, ainsi qu'un pontet 17 liant les deux cercles 14 et deux branches 18 liées chacune à un des cercles. Les deux cercles présentent chacun une rainure intérieure communément appelée drageoir 11 dont le fond forme un brin longitudinal. En référence à la figure 6, chacun des cercles de la monture de lunettes choisie 10 est adapté à accueillir une lentille ophtalmique 15 pourvue sur sa tranche d'un biseau 16 destiné à s'emboîter dans un des drageoirs 11.

L'appareil de lecture de forme 1 représenté sur la figure 1 comporte un jeu de deux mâchoires 3 dont au moins une des mâchoires 3 est mobile par rapport à l'autre de sorte que les mâchoires 3 peuvent être rapprochées ou écartées l'une de l'autre pour former un dispositif de serrage. Chacune des mâchoires 3 est de plus munie de deux pinces formées chacune de deux plots 4 mobiles pour être adaptés à serrer entre eux la monture de lunettes choisie 10 afin de l'immobiliser.

Dans l'espace laissé visible par l'ouverture supérieure centrale du capot 2, un châssis 5 est visible. Une platine (non visible) peut se déplacer en translation sur ce châssis 5 selon un axe de transfert D. Sur cette platine est monté tournant un plateau tournant 6. Ce plateau tournant 6 est donc apte à prendre deux positions sur l'axe de transfert D, une première position dans laquelle le centre du plateau tournant 6 est disposé entre les deux paires de plots 4 fixant le cercle droit de la monture de lunettes choisie 10, et une seconde position dans laquelle le centre du plateau tournant 6 est disposé entre les deux paires de plots 4 fixant le cercle gauche de la monture de lunettes choisie 10.

Le plateau tournant 6 possède un axe de rotation B défini comme l'axe normal à la face avant de ce plateau tournant 6 et passant par son centre. Il est adapté à pivoter par rapport à la platine. Le plateau tournant 6 comporte par ailleurs une lumière 7 oblongue en forme d'arc de cercle à travers laquelle saille un palpeur 8 comportant une tige support 8A et, à son extrémité libre, un doigt de palpage 8B destiné à suivre par glissement ou éventuellement roulement le brin longitudinal de chaque drageoir 11 de la monture de lunettes choisie 10.

L'appareil de lecture de forme 1 comporte des moyens d'actionnement (non représentés) adaptés, d'une part, à faire glisser la tige support 8A le long de la lumière 7 afin de l'éloigner ou de la rapprocher du centre du plateau tournant 6, et, d'autre part, à positionner le doigt de palpage 8B du palpeur 8 à une altitude plus ou moins importante par rapport au plan de la face avant du plateau tournant 6.

En résumé, le palpeur 8 est pourvu de trois degrés de liberté, dont un premier degré de liberté TETA constitué par l'aptitude du palpeur 8 à pivoter autour de l'axe de rotation B grâce à la rotation du plateau tournant 6 par rapport à la platine, un deuxième degré de liberté Z constitué par l'aptitude du palpeur 8 à se translater selon un axe parallèle à l'axe de rotation B du plateau tournant 6, et un troisième degré de liberté R constitué par l'aptitude du palpeur 8 à se mouvoir par rapport à l'axe de rotation B grâce à sa liberté de mouvement le long de l'arc de cercle formé par la lumière 7.

Chaque point lu par l'extrémité du doigt de palpage 8B du palpeur 8 est repéré dans un système de coordonnées correspondant R, TETA, Z.

L'appareil de lecture de forme 1 comporte par ailleurs des moyens d'acquisition 101 de la position R, TETA, Z de l'extrémité du doigt de palpage 8B du palpeur 8.

Il comporte également des moyens de pilotage 102 des moyens d'actionnement de l'appareil, destinés à piloter la position de l'extrémité du doigt de palpage 8B du palpeur 8.

L'ensemble de ces moyens d'acquisition 101 et de pilotage 102 est intégré dans un dispositif électronique et/ou informatique 100 permettant, d'une part, d'actionner les moyens d'actionnement de l'appareil, et, d'autre part, de récupérer et d'enregistrer les données que lui transmettent des capteurs intégrés à l'appareil de lecture de forme 1.

Ce dispositif électronique et/ou informatique 100 est en outre relié à des moyens de communication 103, ici sans fil. Ces moyens de communication 103 sont adaptés, d'une part, à communiquer avec une machine de détourage de lentilles (non représentée) pour lui transmettre les résultats des opérations de lecture des formes de drageoirs lus, et d'autre part, à communiquer avec un serveur informatique 200 distant de l'appareil de lecture de forme 1.

Ce serveur information 200 comporte un registre 201 dont chaque enregistrement est associé à une catégorie référencée de un ou plusieurs modèles de montures de lunettes. Ici, chaque catégorie référencée comporte un unique modèle de montures de lunettes, si bien que chaque enregistrement est associé à un unique modèle de montures de lunettes.

Chaque enregistrement comprend plusieurs rubriques d'informations, dont :
- une ou plusieurs rubriques d'identification formant clef primaire, contenant un identifiant du modèle de montures de lunettes,
- une ou plusieurs rubriques de géométrie transversale contenant des caractéristiques géométriques de plusieurs sections des cercles (en particulier du drageoir) des montures ou de lunettes de ce modèle de montures
- une ou plusieurs rubriques de géométrie longitudinale contenant un ensemble de données représentatives de la géométrie (forme et dimensions) des brins longitudinaux des drageoirs des montures de lunettes de ce modèle de montures.

Il est possible de prévoir que la rubrique d'identification soit distincte de la rubrique de géométrie longitudinale ou au contraire confondue avec cette dernière.

Lorsque ces rubriques sont distinctes, la rubrique d'identification contient par exemple un code d'identification unique, tel qu'un numéro ou un nom, marque ou référence, ou encore une signature d'étiquette électronique (RFID, transpondeur, etc.).

En l'espèce au contraire, le registre contient une rubrique de géométrie longitudinale qui exerce une fonction de clef et se confond avec la rubrique d'identification et constitue une clef de requête parmi les enregistrements du registre permettant de retrouver, à partir de données sur la géométrie longitudinale du drageoir du cercle de monture lu par l'appareil de lecture de forme, l'enregistrement correspondant. Cette rubrique contient les coordonnées cylindriques ou autres d'un ensemble de points d'un brin longitudinal remarquable du drageoir tel que le brin de fond de drageoir.

Pour exercer sa fonction de clef, la rubrique de géométrie longitudinale peut contenir seulement des caractéristiques approximatives de la géométrie longitudinale du drageoir de l'un au moins des cercles du modèle de monture concerné par l'enregistrement, permettant une discrimination entre les différents modèles de montures du registre. Il n'est pas nécessaire que la rubrique de géométrie longitudinale contienne une description complète de la géométrie longitudinale du drageoir permettant de procéder au détourage d'un verre. La rubrique de géométrie longitudinale peut ainsi contenir les coordonnées (cylindriques ou autres) d'un ensemble de 10 à 50 points du drageoir.

Il est cependant avantageux de prévoir, comme en l'espèce, que la rubrique de géométrie longitudinal contient des données plus précises sur la géométrie longitudinale du drageoir du modèle de monture concerné. Un tel renforcement de la précision des données fournies dans la rubrique de géométrie longitudinale offre deux intérêts principaux. D'une part, il facilite la mise en oeuvre des requêtes de recherche et évite l'apparition de doublons par une précision accrue renforçant la capacité discriminante de ces données. D'autre part, il permet comme nous le verrons par la suite, de récupérer, après une requête fructueuse effectuée à partir de données succinctes sur la géométrie longitudinale du drageoir, les données complètes et précises sur cette géométrie longitudinale contenue dans le registre et permettant le détourage d'une lentille. La rubrique de géométrie longitudinale contient à cet effet les coordonnées (cylindriques ou autres) d'un ensemble d'au moins 200 points du drageoir, typiquement entre 300 est 1500 points.

Comme le montrent plus particulièrement les figures 3 à 5, les caractéristiques géométriques de la ou des rubriques de géométrie transversale comportent en l'espèce trois caractéristiques géométriques de section du drageoir, mesurées en deux sections S1, S2 distinctes du drageoir 11. Une des sections est située près du pontet 17 de la monture, et l'autre près du point d'accroche de la branche 18 de la monture (correspondant par exemple à des positions angulaires TETA du palpeur 8 égales à 90 degrés et 270 degrés). Ces caractéristiques géométriques sont constituées par l'angle d'ouverture A du drageoir 11, par la largeur à l'ouverture D du drageoir 11, et par son angle d'inclinaison ALPHA par rapport à un plan P parallèle au plan de la face avant du plateau tournant 6.

Ces deux premières caractéristiques géométriques A, D du drageoir 11 permettent, comme le montre plus précisément la figure 6, de prévoir la manière selon laquelle le biseau 16 de la lentille ophtalmique 15 à détourer va s'emboîter dans le drageoir 11 de la monture de lunettes choisie 10. La troisième caractéristique géométrique ALPHA permet quant à elle de tenir compte de l'inclinaison du drageoir due au galbe de la monture. Elle est également utile pour prévoir la manière selon laquelle le biseau 16 va s'emboîter dans le drageoir 11.

En variante, on peut déterminer ces caractéristiques géométriques en une pluralité plus importante de sections du drageoir afin d'acquérir plus précisément l'inclinaison du drageoir le long du brin longitudinal.

Les caractéristiques géométriques de la ou des rubriques de géométrie transversale comportent de plus une quatrième caractéristique géométrique qui est relative à la position du fond de drageoir 11 par rapport au bord avant et/ou arrière de la monture de lunettes, suivant une direction axiale sensiblement perpendiculaire au plan du cercle de monture ou de la lentille.

Cette quatrième caractéristique géométrique permet ensuite d'usiner la lentille de manière que ses faces avant et/ou arrière soient situées à une distance voulue des bords avant et/ou arrière de la monture.

En effet, une fois le biseau de la lentille emboîté dans le drageoir de la monture, la position du sommet du biseau est sensiblement identique à celle du fond de drageoir. Par conséquent, en mesurant la distance séparant le fond du drageoir et les bords avant et/ou arrière de la monture, on peut positionner de manière esthétique la face optique avant de la lentille par rapport au bord avant du cercle correspondant de la monture au moyen d'un pilotage classique de la position du biseau sur la tranche de la lentille.

En pratique, on peut ainsi positionner la lentille sur la monture de manière que la distance séparant la face avant de la lentille et le bord avant du cercle soit sensiblement constante sur toute la périphérie de la lentille (par exemple nulle). On peut en variante obtenir un montage équilibré dans lequel la distance précitée est égale à la distance séparant la face arrière de la lentille et le bord arrière du cercle.

Le registre 201 peut par ailleurs comporter des rubriques additionnelles contenant des informations supplémentaires, telles que :
- la marque du fabricant de la monture de lunettes 10,
- la base de cette monture (c'est-à-dire, en considérant que la monture s'étend selon la surface d'un cylindre, le rayon de ce cylindre),
- la matière plastique ou métallique de cette monture,
- la couleur de cette monture,
- l'angle pantoscopique de cette monture (c'est-à-dire l'angle formé entre le plan moyen des cercles de la monture et le plan qui est orthogonal aux branches de la monture lorsqu'elles sont déployées),
- la distance séparant les deux cercles de la monture,
- des informations relatives à des éléments décoratifs associés aux lentilles, comme par exemple les formes et positions par rapport à la monture de motifs destinés à être gravés sur les lentilles,
- des informations relatives aux positions et dimensions des trous de perçage des lentilles destinées à un montage avec des montures sans cercles.

En service, il s'agit pour l'opticien d'acquérir les données de forme d'un drageoir d'une monture choisie 10 suffisantes pour permettre le détourage précis d'une lentille destinée à être montée sur la monture concernée. A cet effet, l'opticien procède d'abord à l'acquisition rapide de la géométrie longitudinale du drageoir de la monture.

Pour cela, le brin longitudinal est discrétisé en un certain nombre de points dont on cherche à relever les coordonnées spatiales correspondant aux coordonnées R, TETA, Z de l'extrémité du palpeur 8 lorsque ce dernier est au contact de ces points.

En référence à la figure 1, préalablement au démarrage du palpage du drageoir 11 de chaque cercle 14 de la monture de lunettes choisie 10, cette dernière est insérée entre les plots 4 des mâchoires 3 de manière que chacun des cercles de la monture est prêt à être palpé selon un trajet démarrant par l'insertion du palpeur 8 entre deux plots 4 correspondant à la partie inférieure de la monture, puis suivant le drageoir 11 de la monture, afin de couvrir toute la circonférence du cercle 14 de la monture de lunettes choisie 10.

La figure 3 représente l'extrémité supérieure du palpeur 8 en particulier son doigt de palpage 8B. Ce dernier présente une extrémité pointue insérée dans le drageoir 11 d'un des cercles 14 de la monture 10 pour relever la forme de son brin longitudinal. En position initiale, lorsque le doigt de palpage 8B est disposé entre les deux plots 4, les moyens d'acquisition 101 définissent comme nulles la position angulaire TETA, l'altitude Z et la coordonnée radiale R de l'extrémité du palpeur 8. Puis, le plateau tournant 6 commence à pivoter à une vitesse constante. Le palpeur 8 se déplace le long du fond du drageoir 11 et est guidé selon sa coordonnée radiale R et selon son altitude Z par ce drageoir 11.

La conservation du contact du doigt de palpage 8B avec le fond du drageoir 11 est assurée par les moyens d'actionnement. Ces derniers exercent en effet un effort global de rappel sur le palpeur 8 qui permet au doigt de palpage 8B de rester en contact avec le fond du drageoir 11. Les capteurs de l'appareil de lecture de forme 1 relèvent pendant la rotation du plateau tournant 6 les coordonnées spatiales des points du brin longitudinal du fond du drageoir 11. L'appareil peut ainsi mémoriser une image numérique des deux brins longitudinaux des fonds des drageoirs 11 des cercles 14 de la monture de lunettes choisie 10.

A la suite de cette opération de palpage de la forme du brin longitudinal de chacun des drageoirs 11 des cercles 14 de la monture de lunettes choisie 10, le dispositif électronique et/ou informatique 100 procède à une étape de détermination d'un identifiant du modèle de la monture de lunettes choisie.

Pour ce faire, le dispositif élabore un jeu de données caractéristiques de la forme acquise du brin longitudinal. Ce jeu de données réalisé à partir de la forme acquise du drageoir constitue l'identifiant de la monture. Cet identifiant est par exemple formé par les coordonnées spatiales (exprimées par exemple en coordonnées cylindriques : angle TETA, rayon R et altitude Z d'une pluralité de points du brin longitudinal répartis de façon sensiblement régulière le long du drageoir. On peut par exemple utiliser un ensemble de 10 à 50 points, avantageusement d'une trentaine de points.

L'identifiant ayant été ainsi déterminé, le dispositif électronique et/ou informatique 100 communique cet identifiant au serveur informatique 200 par l'intermédiaire de ses moyens de communication 103.

Une recherche parmi les enregistrements du registre 201 du serveur informatique 200 est alors effectuée dans le but de trouver un enregistrement correspondant dont l'identifiant correspond à l'identifiant de la monture de lunettes choisie 10. A cet effet, le dispositif électronique et/ou informatique 100 effectue une recherche sur la ou les rubriques de géométrie longitudinale, qui constitue en l'espèce la rubrique d'identification ou clef comme expliqué précédemment. La recherche peut par exemple être effectuée par le dispositif électronique et/ou informatique 100 de la façon suivante.

Les données représentatives de la géométrie du brin longitudinal de fond de drageoir mesurées sur la monture choisie 10 (ci-après « brin mesuré ») sont mémorisées par le dispositif électronique et/ou informatique 100 qui les compare successivement aux données de la ou des rubriques de géométrie longitudinale relatives à la géométrie du brin longitudinal de fond de drageoir des modèles de montures du registre (ci-après « brins enregistrés »).

Pour chaque enregistrement, le dispositif électronique et/ou informatique 100 réalise une mise en correspondance virtuelle du brin enregistré et du brin mesuré au moyen d'un algorithme de superposition de ces deux brins.

Le brin enregistré est défini par un ensemble de N points dont les coordonnées sont connues dans un repère défini. De la même manière, lorsque l'appareil de lecture de forme 1 acquiert le brin mesuré, un ensemble de M points de ce brin est défini. Les coordonnées de ces M points sont alors connues dans le repère défini. Le dispositif électronique et/ou informatique 100 calcule les distances entres les différents points des brins mesuré et enregistré. Afin de procéder à la superposition "virtuelle" de ces deux brins, il détermine la transformation qui permet de réaliser cette superposition. Il applique alors par exemple au brin enregistré cette transformation et obtient alors le brin enregistré transformé défini par les N points transformés du brin enregistré.

Puis, il compte le nombre Nsup de points parmi les N points du brin enregistré qui sont situés dans un proche voisinage d'un point du brin mesuré. Par "proche voisinage" on entend que les deux points concernés sont situés à une distance l'un de l'autre inférieure à une distance donnée, par exemple quelques dixièmes de millimètre. Chaque point du brin enregistré transformé situé dans un proche voisinage d'un des M points du brin mesuré, est considéré comme étant superposé à ce point.

Si le nombre Nsup de points du brin enregistré transformé ainsi superposés est supérieur à 90% du nombre N, on considère que la transformation convient et que donc les brins mesuré et enregistré sont superposés. Par contre, si le nombre Nsup est inférieur ou égal à 90%, on fait varier les paramètres de transformation suivant une plage de valeurs déterminée et en utilisant un incrément suffisamment petit, jusqu'à ce qu'une combinaison de ces valeurs fournisse un nombre Nsup de points supérieur à 90% du nombre N ou que la fin du registre soit atteinte sans qu'un brin enregistré ne se superpose au brin mesuré.

La valeur seuil de 90% peut être modifiée suivant la précision voulue de même que la distance donnée définissant le proche voisinage entre deux points. La mise en correspondance des deux brins peut être réalisée en prenant un nombre limité de points plus ou moins élevé.

Si aucun brin enregistré des différents enregistrements n'est trouvé, le dispositif électronique et/ou informatique 100 en déduit que le modèle auquel appartient la monture choisie 10 est absent du registre.

Si un brin enregistré de l'un des enregistrements du registre est trouvé, cet enregistrement est retenu comme correspondant au modèle auquel appartient la monture choisie 10. Le dispositif électronique et/ou informatique 100 lit dans l'enregistrement trouvé du registre les données de géométrie longitudinale (coordonnées des 200 points au moins du brin longitudinal) du drageoir du modèle de monture correspondant à cet enregistrement et donc auquel appartient la monture choisie 10. L'opticien s'épargne ainsi une lecture précise, et par conséquent consommatrice de temps, du brin longitudinal de drageoir.

Le dispositif électronique et/ou informatique 100 lit aussi dans l'enregistrement trouvé du registre les caractéristiques géométriques A, D, ALPHA des sections S1, S2 du drageoir 11 contenues dans la ou les rubriques de géométrie transversale, ainsi que la distance axiale entre le drageoir et le bord avant et/ou arrière du cercle de la monture, de l'enregistrement correspondant.

Ces données de géométrie longitudinale et transversale sont transmises, via les moyens de communication 103 de l'appareil de lecture de forme 1, à la machine de détourage pour que cette dernière puisse calculer la forme selon laquelle les lentilles ophtalmiques 15 devront être détourées de manière à ce que leur biseau 16 puisse s'emboîter correctement et esthétiquement dans les cercles 14 de la monture de lunettes choisie 10.

En revanche, si la recherche n'a pas été concluante et qu'aucun enregistrement correspondant n'a été trouvé dans le registre, le dispositif électronique et/ou informatique 100 affiche un message proposant à l'opérateur qu'une mesure précise et complète de chaque cercle de la monture choisie 10 soit effectuée, pour obtenir les données de géométrie utiles au détourage d'une lentille destinée à être montée sur la monture choisie 10. En cas de validation par l'opérateur ou à défaut de réponse de ce dernier à l'expiration d'un délai prédéfini, le logiciel lance une étape de mesure précise du brin longitudinal du fond de drageoir (sur au moins 200 points) et une étape de palpage des sections S1 et S2 du drageoir 11 de la monture de lunettes choisie 10 pour déterminer les caractéristiques géométriques A, D, ALPHA de ces deux sections du drageoir 11, ainsi que du bord avant et/ou arrière du cercle de monture au niveau de cette section. Ces caractéristiques géométriques sont ensuite transférées au dispositif de détourage pour l'élaboration des consignes d'usinage.

Pour le palpage de la section du cercle de monture et en particulier du drageoir, comme le montrent les figures 4 et 5, les moyens de pilotage 102 du palpeur 8 disposent le doigt de palpage 8B contre le drageoir 11 de sorte que la position angulaire de son extrémité soit égale à 90 degrés - le palpeur 8 est ainsi en position pour palper la première section S1 du drageoir 11 - puis, les moyens d'actionnement entraînent le palpeur en translation de sorte qu'il glisse d'un côté à l'autre du drageoir 11, sur chacun de ses flancs et sur chacun de ses rebords. Lors de ce glissement, les moyens d'acquisition 101 du système électronique et informatique 100 relèvent la largeur d'ouverture D du drageoir 11 (généralement comprise entre 1 et 2,5 millimètres) ainsi que les coordonnées spatiales de points distincts P1, P2, P3, P4 de chacun des deux flancs du drageoir 11 afin de déduire la pente G1, G2 de ces deux flancs. Ils calculent alors l'angle d'ouverture A du drageoir 11 en sommant les valeurs de pentes G1, G2, ainsi que l'angle d'inclinaison ALPHA du drageoir 11. Ils calculent aussi la distance séparant le fond du drageoir de chacun des bords avant et arrière du cercle. Les moyens de pilotage 102 déplacent alors le palpeur 8 dans une seconde position dans laquelle il est au contact du drageoir 11 et dans laquelle sa position angulaire est égale à 270 degrés. Le dispositif électronique et/ou informatique 100 déduit de la même manière la largeur à l'ouverture D, l'angle d'ouverture A et l'angle d'inclinaison ALPHA de la deuxième section S2 du drageoir 11.

Les moyens de communication 103 peuvent alors envoyer les caractéristiques géométriques A, D, ALPHA des sections S1, S2 du drageoir 11 et les distances entre le drageoir et les bords avant et/ou arrière du cercle de la monture 10, ainsi que les coordonnées des points palpés du brin longitudinal du drageoir à la machine de détourage pour que cette dernière puisse calculer la forme selon laquelle les lentilles ophtalmiques 15 devront être détourées de manière à ce que leur biseau 16 respectif puisse s'emboîter correctement dans les cercles 14 de la monture de lunettes choisie 10.

Selon une variante de réalisation de l'invention, lorsque la recherche d'un enregistrement correspondant semble fructueuse, une étape de confirmation du fait que la monture choisie 10 correspond bien à l'enregistrement trouvé dans le registre 201 peut être lancée. Elle consiste à corréler l'ensemble des coordonnées des 360 points relevés du brin longitudinal du drageoir 11 avec l'ensemble des données représentatives de la forme du brin longitudinal de l'enregistrement trouvé. Si cette corrélation fournit un résultat positif indiquant que la forme du brin longitudinal palpé correspond bien à celle du brin longitudinal de l'enregistrement trouvé, le serveur informatique 200 envoie l'ensemble des caractéristiques géométriques A, D, ALPHA de cet enregistrement trouvé à l'appareil de lecture de forme 1. Sinon, on procède au palpage des sections S1, S2 du drageoir 11.

Selon un autre mode de réalisation, l'étape de détermination de l'identifiant du modèle de la monture de lunettes choisie 10 est réalisée au moyen d'une lecture, par l'opticien, de moyens d'identification de la monture de lunettes choisie. Ces moyens d'identification sont par exemple constitués par un code d'identification écrit sur une étiquette fixée à la monture. L'opticien ayant lu ce code d'identification, il le saisit sur l'appareil de lecture de forme, par exemple à l'aide d'un clavier relié au dispositif électronique et/ou informatique 100, pour que ce dernier puisse déclencher la recherche d'un enregistrement correspondant.

Selon un autre mode de réalisation représenté sur la figure 2, l'appareil de lecture de forme 1 comporte des moyens de lecture optique (non représentés) d'un code-barres 13 porté par une plaquette d'identification 12 rapportée sur une des branches 18 de la monture de lunettes choisie 10. Ce code-barres 13 constitue l'identifiant du modèle de la monture.

Ainsi l'appareil de lecture de forme 1 peut-il lire automatiquement le code-barres 13 lorsque la monture est installée dans l'appareil, afin de procéder rapidement et automatiquement à la recherche de l'enregistrement correspondant dans le registre 201, ce qui évite à l'opticien toute charge supplémentaire pour la mise en oeuvre du procédé d'acquisition de forme selon l'invention.

Selon une variante de ce mode de réalisation, l'appareil de lecture de forme 1 comporte une antenne de lecture et les montures peuvent être équipées d'une étiquette électronique du type RFID (Radio Frequence Identifier) ou transpondeur. L'information portée par le signal délivré par le transpondeur constitue alors l'identifiant du modèle de la monture de lunettes.

Selon un autre mode de réalisation de l'invention, la recherche d'un enregistrement correspondant parmi les enregistrements du registre peut être effectuée manuellement. L'appareil de lecture de forme 1 comporte alors une interface homme-machine telle qu'un écran tactile.

Selon ce mode de réalisation, à la suite de la lecture de la forme du contour du drageoir de la monture de lunettes installée dans l'appareil de lecture de forme, ce dernier propose à l'opérateur d'associer une section de drageoir à ladite monture. Dans ce dessein, diverses icônes représentant divers types de sections de drageoirs s'affichent sur l'écran tactile. L'opérateur, à la seule vue du drageoir de la monture de lunettes (ou éventuellement après avoir réalisé manuellement quelques mesures sur la section du drageoir), sélectionne alors manuellement une des icônes de manière à ce que l'appareil de lecture de forme associe à ladite monture la section de drageoir sélectionnée.

Ainsi, la machine de détourage peut ensuite calculer la forme selon laquelle les lentilles ophtalmiques à monter sur cette monture devront être détourées de manière à ce que leurs biseaux respectifs puissent s'emboîter correctement dans les cercles de la monture.

En variante chaque icône peut comporter une marque et/ou un nom de monture de telle sorte que l'opérateur sélectionne facilement dans le registre l'enregistrement correspondant à la monture de lunettes installée dans l'appareil de lecture de forme.

## Revendications

1. Procédé d'acquisition de la forme d'une partie au moins d'un cercle (14) d'une monture de lunettes choisie (10) comprenant l'acquisition d'au moins une caractéristique géométrique (A, D, ALPHA) d'une section du cercle (14) **caractérisé en ce que** l'acquisition de ladite au moins une caractéristique géométrique (A, D, ALPHA) comprend :
une étape d'acquisition de la forme d'un brin longitudinal du drageoir du cercle (14) au moyen d'un appareil de lecture de forme,
- une étape de lecture d'un registre (201) dont chaque enregistrement est associé à un modèle ou une catégorie de modèles de montures de lunettes et comprend au moins une caractéristique géométrique (A, D, ALPHA) d'au moins une section d'un cercle des montures de ce modèle ou de cette catégorie de modèles de montures, avec une recherche d'un enregistrement correspondant au modèle ou à la catégorie de modèles de montures de lunettes à laquelle appartient la monture de lunettes choisie (10), et
- une étape de lecture de ladite au moins une caractéristique géométrique (A, D, ALPHA) de cet enregistrement correspondant, si un enregistrement correspondant du registre (201) est trouvé.

2. Procédé selon la revendication précédente, dans lequel l'étape de lecture du registre (201) est précédée d'une étape de détermination d'un identifiant (13) d'un modèle ou d'une catégorie de modèles de montures de lunettes auquel appartient la monture de lunettes choisie (10), et dans lequel, chaque enregistrement dudit registre (201) comprenant au moins un identifiant (13) du modèle ou de la catégorie de modèles auquel il est associé, la recherche d'un enregistrement correspondant est effectuée en recherchant un enregistrement dont l'identifiant (13) correspond à l'identifiant déterminé du modèle ou de la catégorie de modèles de montures de lunettes à laquelle appartient la monture de lunettes choisie (10).

3. Procédé selon l'une des revendications précédentes, dans lequel, si aucun enregistrement correspondant n'est trouvé dans le registre (201), on procède à une étape de palpage, avec ou sans contact, d'au moins une section du drageoir (11) du cercle (14) de la monture de lunettes choisie (10) et on en déduit la caractéristique géométrique de section recherchée.

4. Procédé selon la revendication 2, dans lequel l'étape de détermination de l'identifiant (13) du modèle ou de la catégorie de modèles de montures de lunettes à laquelle appartient la monture de lunettes choisie (10) est réalisée par lecture de moyens d'identification (12) équipant la monture de lunettes choisie (10).

5. Procédé selon la revendication précédente, dans lequel les moyens d'identification (12) de la monture de lunettes choisie (10) comprennent un transpondeur ou un code-barres (13).

6. Procédé selon la revendication 2, dans lequel l'étape de détermination de l'identifiant (13) du modèle ou de la catégorie de modèles de montures de lunettes à laquelle appartient la monture de lunettes choisie (10) est réalisée par lecture, par un opérateur, d'un code d'identification (13) de la monture de lunettes choisie (10).

7. Procédé selon la revendication 2, dans lequel on déduit de la forme du brin longitudinal du drageoir (11) ledit identifiant du modèle ou de la catégorie de modèles de la monture choisie.

8. Procédé selon la revendication précédente, dans lequel l'identifiant déterminé est un ensemble de données caractérisant ou représentant la forme du brin longitudinal du drageoir (11) de la monture de lunettes choisie (10) et l'identifiant de chaque enregistrement du registre (201) est un ensemble de données caractérisant ou représentant la forme du brin longitudinal du drageoir du modèle ou de la catégorie de modèles associé à l'enregistrement.

9. Procédé selon l'une des revendications précédentes, dans lequel chaque enregistrement du registre (201) est associé à un unique modèle de montures de lunettes.

10. Procédé selon l'une des revendications précédentes, dans lequel ladite au moins une caractéristique géométrique (A, D, ALPHA) de section du cercle (14) comprend une caractéristique géométrique (A, D, ALPHA) relative à la forme d'un drageoir (11) de ce cercle (14).

11. Procédé selon l'une des revendications précédentes, dans lequel ladite au moins une caractéristique géométrique (A, D, ALPHA) de section du cercle (14) comprend une caractéristique géométrique (A, D, ALPHA) relative à une distance séparant le fond d'un drageoir (11) de ce cercle (14) d'un bord de ce cercle.

## Claims

1. A method of acquiring the shape of at least a portion of a rim (14) of a selected eyeglass frame (10), the method comprising acquiring at least one geometrical characteristic (A, D, ALPHA) of a section of said rim (14), the method being **characterized in that** the acquisition of said at least one geometrical characteristic (A, D, ALPHA) comprises:
- a step of acquiring the shape of a longitudinal strand of a bezel (11) of said rim (14)with a shape tracer appliance,
- a step of reading a register (201) in which each entry is associated with an eyeglass frame model or category of models and includes at least one geometrical characteristic (A, D, ALPHA) of at least one section of a frame rim of said model or said category of models, with a search for an entry corresponding to the eyeglass frame model or category of models to which the selected eyeglass frame (10) belongs; and
- a step of reading said at least one geometrical characteristic (A, D, ALPHA) from said corresponding entry, if a corresponding entry is found in the register (201).

2. A method according to the preceding claim, in which the step of reading the register (201) is preceded by a step of determining an identifier (13) of an eyeglass frame model or category of models to which the selected eyeglass frame (10) belongs, with each entry of said register (201) including at least one identifier (13) of the model or category of models with which it is associated, and the search for a corresponding entry is performed by searching for an entry in which the identifier (13) corresponds to the determined identifier of the eyeglass frame model or category of models to which the selected eyeglass frame (10) belongs.

3. A method according to any preceding claim, in which, if no corresponding entry is found in the register (201), a step is performed of feeling, with or without contact, at least one section of the bezel (11) of the rim (14) of the selected eyeglass frame (10), and the looked-for section geometrical characteristic is deduced therefrom.

4. A method according to claim 2, in which the step of determining the identifier (13) of the eyeglass frame model or category of models to which the selected eyeglass frame (10) belongs is performed by reading identification means (12) fitted to the selected eyeglass frame (10).

5. A method according to the preceding claim, in which the identification means (12) of the selected eyeglass frame (10) comprise a transponder or a bar code (13).

6. A method according to claim 2, in which the step of determining the identifier (13) of the eyeglass frame model or category of models to which the selected eyeglass frame (10) belongs is performed by an operator reading an identification code (13) of the selected eyeglass frame (10).

7. A method according to claim 2, in which said identifier of the model or the category of models of the selected frame is deduced from the shape of the longitudinal strand of the bezel (11).

8. A method according to the preceding claim, in which the determined identifier is a data set characterizing or representing the shape of the longitudinal strand of the bezel (11) of the selected eyeglass frame (10), and the identifier of each entry in the register (201) is a data set characterizing or representing the shape of the longitudinal strand of the bezel of the model or category of models associated with the entry.

9. A method according to any preceding claim, in which each entry in the register (201) is associated with a single eyeglass frame model.

10. A method according to any preceding claim, in which said at least one geometrical characteristic (A, D, ALPHA) for the section of the rim (14) comprises a geometrical characteristic (A, D, ALPHA) relating to the shape of a bezel (11) of the rim (14).

11. A method according to any preceding claim, in which said at least one geometrical characteristic (A, D, ALPHA) for the section of the rim (14) comprises a geometrical characteristic (A, D, ALPHA) relating to a distance between the bottom of a bezel (11) of said rim (14) and an edge of said rim.

## Patentansprüche

1. Erfassungsverfahren für die Form zumindest eines Abschnitts eines Rings (14) einer ausgewählten Brillenfassung (10) mit der Erfassung von mindestens einem geometrischen Merkmal (A, D, ALPHA) von einem Abschnitts des Rings (14), **dadurch gekennzeichnet, dass** die Erfassung von diesem mindestens einem geometrischen Merkmal (A, D, ALPHA) umfasst:
- einen Erfassungsschritt der Form eines Längsabschnitts des Kerbs des Rings (14) mithilfe eines Formablesegeräts,
- einen Ableseschritt eines Verzeichnisses (201), dessen Speicherung jeweils einem Modell oder einer Kategorie von Brillenfassungsmodellen zugeordnet ist und mindestens ein geometrisches Merkmal (A, D, ALPHA) von mindestens einem Abschnitt einer Brillenfassung dieses Modells oder von dieser Kategorie von Brillenfassungsmodellen umfasst, mit einer Suche einer diesem Modell oder der Kategorie von Brillenfassungsmodellen, zu der die gewählte Brillenfassung (10) gehört, entsprechenden Speicherung, und
- einen Ableseschritt von diesem mindestens einem geometrischen Merkmal (A, D, ALPHA) dieser entsprechenden Speicherung, wenn eine dem Verzeichnis (201) entsprechende Speicherung gefunden wird.

2. Verfahren nach vorausgehendem Anspruch, bei dem dem Ableseschritt des Verzeichnisses (201) ein Schritt zur Ermittlung eines Kennzeichens (13) eines Modells oder einer Kategorie von Brillenfassungsmodellen, zu der die gewählte Brillenfassung (10) gehört, vorausgeht, und bei dem jede Speicherung des Verzeichnisses (201) mindestens ein Kennzeichen (13) des Modells oder der Kategorie von Brillenfassungsmodellen, zu der sie gehört, umfasst, wobei die Suche einer entsprechenden Speicherung durch das Suchen einer Speicherung erfolgt, deren Kennzeichen (13) dem ermittelten Kennzeichen des Modells oder der Kategorie von Brillenfassungsmodellen entspricht, zu der die gewählte Brillenfassung (10) gehört.

3. Verfahren nach einem der vorausgehenden Ansprüche, bei dem man, wenn im Verzeichnis (201) keine entsprechende Speicherung gefunden wird, einen kontaktlosen Abtastschritt oder einen Abtastschritt mit Kontakt von mindestens einem Abschnitt des Kerbs (11) des Rings (14) der gewählten Brillenfassung (10) durchführt und man davon das geometrische Merkmal des gesuchten Abschnitts ableitet.

4. Verfahren nach Anspruch 2, bei dem der Schritt zur Ermittlung des Kennzeichens (13) des Modells oder der Kategorie von Brillenfassungsmodellen, zu der die gewählte Brillenfassung (10) gehört, durch Ablesen von Identifikationsmitteln (12) bewerkstelligt wird, die an der gewählten Brillenfassung (10) vorhanden sind.

5. Verfahren nach vorausgehendem Anspruch, bei dem die Identifikationsmittel (12) der gewählten Brillenfassung (10) einen Transponder oder einen Strichcode (13) umfassen.

6. Verfahren nach Anspruch 2, bei dem der Schritt zur Ermittlung des Kennzeichens (13) des Modells oder der Kategorie von Brillenfassungsmodellen, zu der die gewählte (10) Brillenfassung gehört, durch Ablesen durch einen Bediener eines Identifikationscodes (13) der gewählten Brillenfassung (10) bewerkstelligt wird.

7. Verfahren nach Anspruch 2, bei dem man von der Form des Längsabschnitts des Kerbs (11) das Kennzeichen des Modells oder der Kategorie von Modellen der gewählten Fassung ableitet.

8. Verfahren nach dem vorausgehenden Anspruch, bei dem das ermittelte Kennzeichen eine Einheit von charakteristischen oder die Form des Längsabschnittes des Kerbs (11) der gewählten Brillenfassung (10) repräsentierenden Daten ist und das Kennzeichen jeder Speicherung des Verzeichnisses (201) eine Einheit von charakteristischen oder die Form des Längsabschnittes des Kerbs des der Speicherung zugeordneten Modells oder der Kategorie von Modellen repräsentierenden Daten ist.

9. Verfahren nach einem der vorausgehenden Ansprüche, bei dem jede Speicherung des Verzeichnisses (201) einem einzigen Modell von Brillenfassungen zugeordnet ist.

10. Verfahren nach einem der vorausgehenden Ansprüche, bei dem das mindestens eine geometrische Merkmal (A, D, ALPHA) des Ringabschnittes (14) ein geometrisches Merkmal (A, D, ALPHA) umfasst, das sich auf die Form eines Kerbs (11) dieses Rings (14) bezieht.

11. Verfahren nach einem der vorausgehenden Ansprüche, bei dem das mindestens eine geometrische Merkmal (A, D, ALPHA) des Ringabschnittes (14) ein geometrisches Merkmal (A, D, ALPHA) umfasst, das sich auf eine Distanz zwischen dem Boden eines Kerbs (11) dieses Rings (14) und einem Rand dieses Rings bezieht.
